# EUROPEAN PATENT SPECIFICATION

(11) **EP 2 676 526 B1**
(45) Date of publication and mention of the grant of the patent: **08.05.2019**
(21) Application number: 12708395.4
(22) Date of filing: 16.02.2012
(51) Int. Cl.: H05B 33/08

(54) **ELECTROMAGNETIC BALLAST-COMPATIBLE LIGHTING DRIVER FOR LIGHT-EMITTING DIODE LAMP**
MIT EINEM ELEKTROMAGNETISCHEN BALLAST KOMPATIBLER BELEUCHTUNGSTREIBER FÜR EINE LICHTEMITTIERENDE DIODENLAMPE
CIRCUIT D'ATTAQUE D'ÉCLAIRAGE, COMPATIBLE AVEC UN BALLAST ÉLECTROMAGNÉTIQUE, POUR UNE LAMPE À DIODES ÉLECTROLUMINESCENTES

(30) Priority: 16.02.2011 US 201161443300 P
(43) Date of publication of application: 25.12.2013
(73) Proprietor: Signify Holding B.V., 5656 AE Eindhoven (NL)
(72) Inventor: JANS, William, Peter, Mechtildis, Marie, 5656 AE Eindhoven (NL); TAO, Haimin, 5656 AE Eindhoven (NL); VAN BODEGRAVEN, Tijmen, Cornelis, 5656 AE Eindhoven (NL); ZIJLSTRA, Patrick, John, 5656 AE Eindhoven (NL)
(74) Representative: van Eeuwijk, Alexander Henricus Waltherus
(86) International application number: PCT/IB2012/050705
(87) International publication number: WO 2012/110973

(56) References cited:
- WO-A1-2009/001279
- WO-A1-2011/014111
- US-A1- 2004 012 959
- US-A1- 2006 193 131
- US-A1- 2008 062 680

## Description

### Technical Field

The present invention is directed generally to a lighting driver for driving one or more light-emitting diode (LED) light sources. More particularly, various inventive methods and apparatus disclosed herein relate to an LED lamp and an associated lighting driver that can be compatibly retrofit into lighting fixtures having electromagnetic (EM) ballasts.

### Background

There are many commercial, industrial, and retail environments, such as factories, stores, warehouses, and office buildings that have a large number of lighting fixtures with installed fluorescent tubes (e.g., T8 or T12 tubes) and accompanying electromagnetic (EM) ballasts.

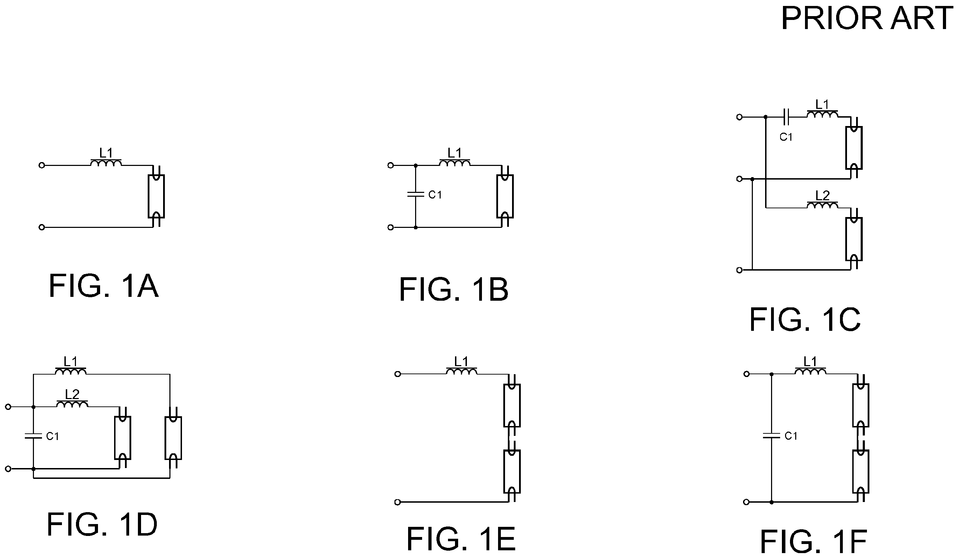

**FIGs. 1A-1F** illustrate some typical EM ballast circuit configurations for fluorescent tube lamps. **FIG. 1A** shows an uncompensated configuration which exhibits a large inductive current and a low power factor (PF). **FIG. 1B** shows a parallel compensated configuration which uses a capacitor at the input to improve PF. **FIG. 1C** shows a series compensated dual lamp configuration which employs a series capacitor for compensation, where the upper lamp has a leading current while the lower lamp has a lagging current such that the two lamps compensate for each other, resulting in a total PF is close to unity. **FIG. 1D** shows a parallel compensated dual lamp configuration. **FIG. 1E** shows an uncompensated two-lamps-in-series configuration, and **FIG. 1F** shows a parallel compensated two-lamps-in-series configuration. The configurations of **FIGs. 1A-1F** illustrate inductive ballasts, with the exception of the upper lamp in **FIG. 1C** which illustrates a capacitive ballast.

Illumination devices based on semiconductor light sources, such as light-emitting diodes (LEDs), offer a viable alternative to traditional fluorescent, HID, and incandescent lamps. Functional advantages and benefits of LEDs include high energy conversion and optical efficiency, durability, lower operating costs, and many others.

Accordingly, in some cases there is a desire to replace existing traditional fluorescent light sources with newer LED light sources. In order to eliminate labor costs associated with installing new lighting fixtures or rewiring existing lighting fixtures, in some cases, there is a desire to retrofit newer LED tube (TLED) lamps into the existing lighting fixtures with existing EM ballasts in place of the exiting fluorescent tube lamps. In such cases, it is desirable to be able to use the same TLED lamp with different ballasts having various configurations illustrated in **FIGs. 1A-1F****.**

One of the major challenges of TLED lamp retrofit, however, is the compatibility of the TLED lamp with existing installed EM ballasts designed for fluorescent lamps. On example of such adaptation is disclosed in document US2006/0193131 where a shunt switch circuit detects the EM ballast striking voltage and shunts the input rectifier.

A conventional switching mode driver may operate behind an EM ballast when caution is taken in the circuit design, but it often leads to very poor power factor, and to unbalanced light output when two TLED lamps are in series. In particular, a TLED lamp may be driven with a switching mode power supply (SMPS), but conventional SMPS drivers lead to poor power factor when operated behind a parallel compensated EM ballast (e.g., FIGs. 1B and 1D). Also, conventional SMPS drivers can not operate in series because it leads to flicker and/or unbalanced light output between the two series connected lamps. Furthermore, for a TLED lamp having an aluminum tube-based architecture, there are safety issues which much be addressed related to mains power.

Thus, there is a need in the art to provide a TLED lamp which can be retrofit into existing lighting fixtures compatibly with a variety of installed EM ballasts which are designed for fluorescent lamps. There is also a need for a TLED lamp which can maintain a high power factor when used in a lighting fixture with a compensated EM ballast configuration. There is also a need for a TLED lamp which can be connected in a series configuration with another TLED lamp without an unacceptable level of flicker and/or unbalanced light output between the two series connected TLED lamps. There is further a need to provide a TLED lamp that can provide safe operation in an aluminum tube based architecture.

### Summary

The present disclosure is directed to inventive methods and apparatus for a light emitting diode (LED) tube (TLED) lamp that can be retrofit into existing lighting fixtures compatibly with a variety of installed electromagnetic (EM) ballasts which are designed for fluorescent lamps. For example, in some embodiments a TLED lamp as disclosed herein can maintain a high power factor when used in a lighting fixture with a compensated ballast configuration, can be connected in a series configuration with another TLED lamp without an unacceptable level of flicker and/or unbalanced light output between the two series connected TLED lamps, and can provide safe operation in an aluminum tube based architecture.

Generally, in one aspect, an apparatus comprises a light emitting diode (LED) tube (TLED) lamp, the TLED lamp including: at least partially transparent tube having an electrical connector configured to be installed in a fluorescent light fixture; one or more light emitting diodes provided inside the tube; and a lighting driver provided inside the tube and connected to the electrical connector and being configured to supply power to the one or more light emitting diodes. The lighting driver comprises a shunt switch circuit and a switching mode power supply. The shunt switch circuit comprises: a rectifier connected to the electrical connector, a shunt switching device connected across an output of the rectifier, an output capacitor and a diode connected in series across the output of the rectifier, wherein the capacitor is connected across an output of the shunt switch circuit, a voltage sensor configured to sense a bus voltage across the output capacitor, a current sensor configured to sense a rectifier current through the rectifier, and a processor configured to control a switching operation of the shunt switching device in response to the sensed bus voltage and the rectifier current. The switching mode power supply is configured to receive the bus voltage and in response thereto to supply a lamp current to drive the one or more light emitting diodes, and is further configured to provide galvanic isolation between the shunt switch circuit and the one or more light emitting diodes.

In one aspect of the invention the processor is configured to execute an algorithm to detect when an input of the rectifier is connected to mains power without an electromagnetic (EM) ballast, and in response thereto to disable the lighting driver

According to one aspect of the invention the algorithm for detecting when the input of the rectifier is connected to mains power without an EM ballast includes disabling the supply of the lamp current to drive the one or more light emitting diodes; and while the supply of the lamp current is disabled, determining at least one of: (1) a peak rectifier current, and (2) a time delay between a zero crossing of the rectifier current and the peak rectifier current; and comparing at least one of: (1) the peak rectifier current and a peak detection threshold; and (2) the time delay and a time delay threshold to obtain a comparison result; and determining when the input of the rectifier is connected to mains power without the EM ballast based on the obtained comparison result.

In another aspect of the invention the processor is configured to execute an algorithm the processor is configured to execute an algorithm to detect a type of electromagnetic (EM) ballast connected to an input of the rectifier, and to control a switching operation of the shunt switching device to regulate the bus voltage according to the detected type of EM ballast.

According to one optional feature of this embodiment, when the detected type of EM ballast is a capacitive ballast, the processor controls the shunt switch to be turned on at a zero crossing of the rectifier current, and when the detected type of EM ballast is an inductive ballast, the processor controls the shunt switch to be turned off at a zero crossing of the rectifier current.

According to another aspect of the invention the algorithm for detecting the type of EM ballast includes: controlling the shunt switch to be turned off at a zero crossing of the rectifier current and measuring a first average value of the rectifier current; controlling the shunt switch to be turned off at an offset time period with respect to the zero crossing of the rectifier current and measuring a second average value of the rectifier current; comparing the first average current to the second average current; when the second average current is less than the first average current, determining that the type of EM ballast is a capacitive ballast; and when the second average current is not less than the first average current, determining that the type of EM ballast is an inductive ballast.

Generally, in another aspect, a device comprises a lighting driver, including: a shunt switch circuit configured to detect when an input of the lighting driver is connected to mains power without a ballast, and in response thereto to disable the lighting driver, and further configured to detect a type of ballast connected to the input of the lighting driver when the input of the lighting driver is connected to the ballast, and to regulate a bus voltage of the shunt switch circuit according to the detected type of ballast; and a switching mode power supply configured to receive the bus voltage of the shunt switch circuit and in response thereto to supply a lamp current to drive one or more light emitting diodes.

Generally, in yet another aspect, a device includes: a rectifier connected to an input of the device, a shunt switching device connected across an output of the rectifier, an output capacitor and a diode connected in series across the output of the rectifier, wherein the output capacitor is connected across an output of the shunt switch circuit, a voltage sensor configured to sense a bus voltage across the output capacitor, a current sensor configured to sense a rectifier current through the rectifier, and a processor configured to control a switching operation of the shunt switching device in response to the sensed bus voltage and the rectifier current and further configured to execute an algorithm to detect when an input of the device is connected to mains power without an electromagnetic (EM) ballast.

As used herein for purposes of the present disclosure, the term "LED" should be understood to include any electroluminescent diode or other type of carrier injection/junction-based system that is capable of generating radiation in response to an electric signal. Thus, the term LED includes, but is not limited to, various semiconductor-based structures that emit light in response to current, light emitting polymers, organic light emitting diodes (OLEDs), electroluminescent strips, and the like. In particular, the term LED refers to light emitting diodes of all types (including semi-conductor and organic light emitting diodes) that may be configured to generate radiation in one or more of the infrared spectrum, ultraviolet spectrum, and various portions of the visible spectrum (generally including radiation wavelengths from approximately 400 nanometers to approximately 700 nanometers).

For example, one implementation of an LED configured to generate essentially white light (e.g., a white LED) may include a number of dies which respectively emit different spectra of electroluminescence that, in combination, mix to form essentially white light. In another implementation, a white light LED may be associated with a phosphor material that converts electroluminescence having a first spectrum to a different second spectrum. In one example of this implementation, electroluminescence having a relatively short wavelength and narrow bandwidth spectrum "pumps" the phosphor material, which in turn radiates longer wavelength radiation having a somewhat broader spectrum.

It should also be understood that the term LED does not limit the physical and/or electrical package type of an LED. For example, as discussed above, an LED may refer to a single light emitting device having multiple dies that are configured to respectively emit different spectra of radiation (e.g., that may or may not be individually controllable). Also, an LED may be associated with a phosphor that is considered as an integral part of the LED (e.g., some types of white LEDs). In general, the term LED may refer to packaged LEDs, non-packaged LEDs, surface mount LEDs, chip-on-board LEDs, T-package mount LEDs, radial package LEDs, power package LEDs, LEDs including some type of encasement and/or optical element (e.g., a diffusing lens), etc.

The term "light source" should be understood to refer to any one or more of a variety of radiation sources, including, but not limited to, LED-based sources (including one or more LEDs as defined above. A given light source may be configured to generate electromagnetic radiation within the visible spectrum, outside the visible spectrum, or a combination of both. Hence, the terms "light" and "radiation" are used interchangeably herein. Additionally, a light source may include as an integral component one or more filters (e.g., color filters), lenses, or other optical components. Also, it should be understood that light sources may be configured for a variety of applications, including, but not limited to, indication, display, and/or illumination. An "illumination source" is a light source that is particularly configured to generate radiation having a sufficient intensity to effectively illuminate an interior or exterior space. In this context, "sufficient intensity" refers to sufficient radiant power in the visible spectrum generated in the space or environment (the unit "lumens" often is employed to represent the total light output from a light source in all directions, in terms of radiant power or "luminous flux") to provide ambient illumination (i.e., light that may be perceived indirectly and that may be, for example, reflected off of one or more of a variety of intervening surfaces before being perceived in whole or in part).

The term "lighting unit" is used herein to refer to an apparatus including one or more light sources of same or different types. A given lighting unit may have any one of a variety of mounting arrangements for the light source(s), enclosure/housing arrangements and shapes, and/or electrical and mechanical connection configurations. Additionally, a given lighting unit optionally may be associated with (e.g., include, be coupled to and/or packaged together with) various other components (e.g., control circuitry) relating to the operation of the light source(s). An "LED-based lighting unit" refers to a lighting unit that includes one or more LED-based light sources as discussed above, alone or in combination with other non LED-based light sources.

The term "lamp" should be interpreted to refer to a lighting unit that includes connector(s) for receiving electrical power and for generating radiation (e.g., visible light) from the received electrical power. Examples include bulbs and tubes, including incandescent bulbs, fluorescent bulbs, fluorescent tubes, LED bulbs, LED tube (TLED) lamps, etc.

The term "lighting fixture" is used herein to refer to an implementation or arrangement of one or more lighting units in a particular form factor, assembly, or package, and may be associated with (e.g., include, be coupled to and/or packaged together with) other components, for example an electromagnetic (EM) ballast, in particular for supplying power.

The term "controller" is used herein generally to describe various apparatus relating to the operation of one or more light sources. A controller can be implemented in numerous ways (e.g., such as with dedicated hardware) to perform various functions discussed herein. A "processor" is one example of a controller which employs one or more microprocessors that may be programmed using software (e.g., microcode) to perform various functions discussed herein. A controller may be implemented with or without employing a processor, and also may be implemented as a combination of dedicated hardware to perform some functions and a processor (e.g., one or more programmed microprocessors and associated circuitry) to perform other functions. Examples of controller components that may be employed in various embodiments of the present disclosure include, but are not limited to, conventional microprocessors, application specific integrated circuits (ASICs), and field-programmable gate arrays (FPGAs).

As used herein, "galvanic isolation" refers to the principle of isolating functional sections of electrical systems preventing the moving of charge-carrying particles from one section to another. There is no electric current flowing directly from a first section to a second section when the first and second sections are galvanically isolated from each other. Energy and/or information can still be exchanged between the sections by other means, e.g. capacitance, induction, electromagnetic waves, optical, acoustic, or mechanical means.

As used herein, an "optocoupler" is an electronic device designed to transfer electrical signals by utilizing light waves to provide coupling with electrical isolation between its input and output, and may sometimes also be referred to as an opto-isolator, photocoupler, or optical isolator.

As used herein, "mains" refers to the general-purpose alternating current (AC) electric power supply from the public utility grid, and may sometimes also be referred to as household power, household electricity, domestic power, wall power, line power, city power, street power, and grid power.

In various implementations, a processor or controller may be associated with one or more storage media (generically referred to herein as "memory," e.g., volatile and non-volatile computer memory such as RAM, PROM, EPROM, and EEPROM, floppy disks, compact disks, optical disks, magnetic tape, etc.). In some implementations, the storage media may be encoded with one or more programs that, when executed on one or more processors and/or controllers, perform at least some of the functions discussed herein. Various storage media may be fixed within a processor or controller or may be transportable, such that the one or more programs stored thereon can be loaded into a processor or controller so as to implement various aspects of the present invention discussed herein. The terms "program" or "computer program" are used herein in a generic sense to refer to any type of computer code (e.g., software or microcode) that can be employed to program one or more processors or controllers.

It should be appreciated that all combinations of the foregoing concepts and additional concepts discussed in greater detail below (provided such concepts are not mutually inconsistent) are contemplated as being part of the inventive subject matter disclosed herein. In particular, all combinations of claimed subject matter appearing at the end of this disclosure are contemplated as being part of the inventive subject matter disclosed herein. It should also be appreciated that terminology explicitly employed herein that also may appear in any disclosure incorporated by reference should be accorded a meaning most consistent with the particular concepts disclosed herein.

### Brief Description of the Drawings

In the drawings, like reference characters generally refer to the same parts throughout the different views. Also, the drawings are not necessarily to scale, emphasis instead generally being placed upon illustrating the principles of the invention.
FIGs. 1A-F illustrate some typical EM ballast circuit configurations for fluorescent tube lamps known in the art.
FIG. 2 illustrates an exemplary embodiment of a light emitting diode (LED) tube (TLED) lamp that may be retrofit in place of a fluorescent tube lamp in an existing lighting fixture.
FIG. 3 is a block diagram illustrating one exemplary embodiment of a TLED lamp supplied with power by an electromagnetic (EM) ballast.
FIG. 4 is a detailed diagram illustrating one exemplary embodiment of a TLED lamp supplied with power by an electromagnetic (EM) ballast.
FIG. 5 is a block diagram illustrating one exemplary embodiment of a switching mode power supply.
FIG. 6 is a schematic diagram illustrating one exemplary embodiment of a shunt switch circuit.
FIG. 7A illustrates a relationship between various signals which may be employed in a shunt switch circuit operating in one operating mode.
FIG. 7B illustrates a relationship between various signals which may be employed in a shunt switch circuit operating in another operating mode.
FIGs. 8A-B plot average rectifier current versus switching control pulse timing for an exemplary embodiment of a TLED lamp and associated lighting driver connected to two different types of electromagnetic ballasts.
FIGs. 9A-B illustrate two embodiments of a method of detecting a type of ballast connected to a TLED lamp and associated lighting driver.
FIG. 10 is a flowchart of one embodiment of a method of detecting a type of ballast connected to a TLED lamp and associated lighting driver.
FIG. 11 is a functional block diagram illustrating operation of a feedback loop for setting a bus voltage for a shunt switch circuit.
FIGs. 12A-B illustrate lamp current signals when one exemplary embodiment of a TLED lamp is connected, respectively to an EM ballast, and to mains power without an EM ballast.
FIG. 13 is a detailed diagram illustrating another exemplary embodiment of a TLED lamp supplied with power by an electromagnetic (EM) ballast.
FIG. 14 illustrates two TLED lamps connected in series with an EM ballast.

### Detailed Description

Generally, Applicants have recognized and appreciated that it would be beneficial to provide a light emitting diode (LED) tube (TLED) lamp that can be retrofit into an existing lighting fixture for a fluorescent tube lamp with a compensated ballast configuration, and which can maintain a high power factor, can be connected in a series configuration with another TLED without an unacceptable level of flicker and/or unbalanced light output between the two series connected TLED lamps, and can provide safe operation in an aluminum tube based architecture.

In view of the foregoing, various embodiments and implementations of the present invention are directed to a lighting driver that detects when it is connected to mains power without a ballast, and in response thereto disables the lighting driver, and further detects a type of ballast when it is connected to a ballast, and regulates an output bus voltage in response to the detected type of ballast. Further, a switching mode power supply may be configured to receive the bus voltage and in response thereto to supply a current to drive one or more light emitting diodes.

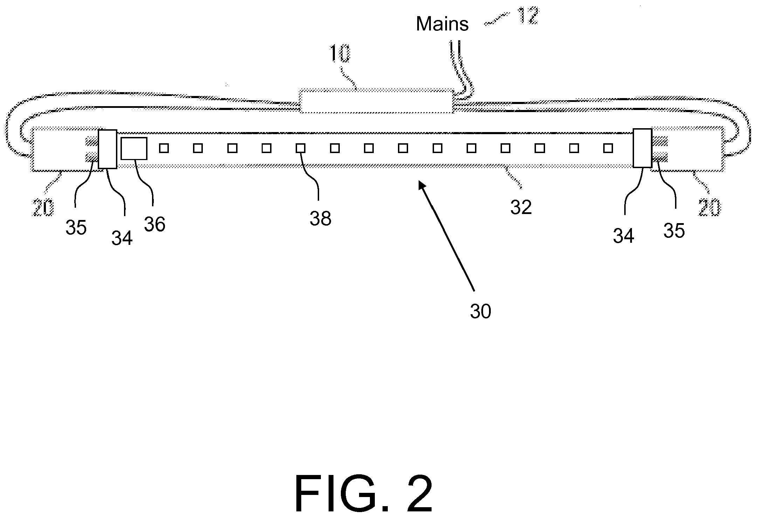

FIG. 2 illustrates an exemplary embodiment of a light emitting diode (LED) tube (TLED) lamp 30 that may be retrofit in place of a fluorescent tube lamp in an existing lighting fixture. TLED lamp 30 includes a substantially cylindrical shell or tube 32 and two end caps 34 each having a connector 35 provided therewith, and further includes a lighting driver 36 and one or more light emitting diodes (LEDs) 38. The tube 32 is at least partially transparent or translucent to visible light. In some embodiments, LED lamp 30 may have only one end cap 34 and/or connector 35. Connector(s) 35 of TLED 30 are connected via connector(s) 20 to an electromagnetic (EM) ballast 10 that supplies TLED 30 with power from mains 12. In particular, lighting driver 36 receives power from ballast 10 via electrical connector(s) 35, and is configured to supply power to the one or more light emitting diodes 38. EM ballast 10 may be an uncompensated ballast, an inductive ballast, or a capacitive ballast.

In some embodiments, at least a portion of substantially cylindrical shell or tube 32 is metallic, for example aluminum, in which case TLED lamp 30 may be said to have an aluminum tube-based architecture. In other embodiments, substantially cylindrical shell or tube 32 is made of glass, in which case TLED lamp 30 may be said to have a glass tube-based architecture.

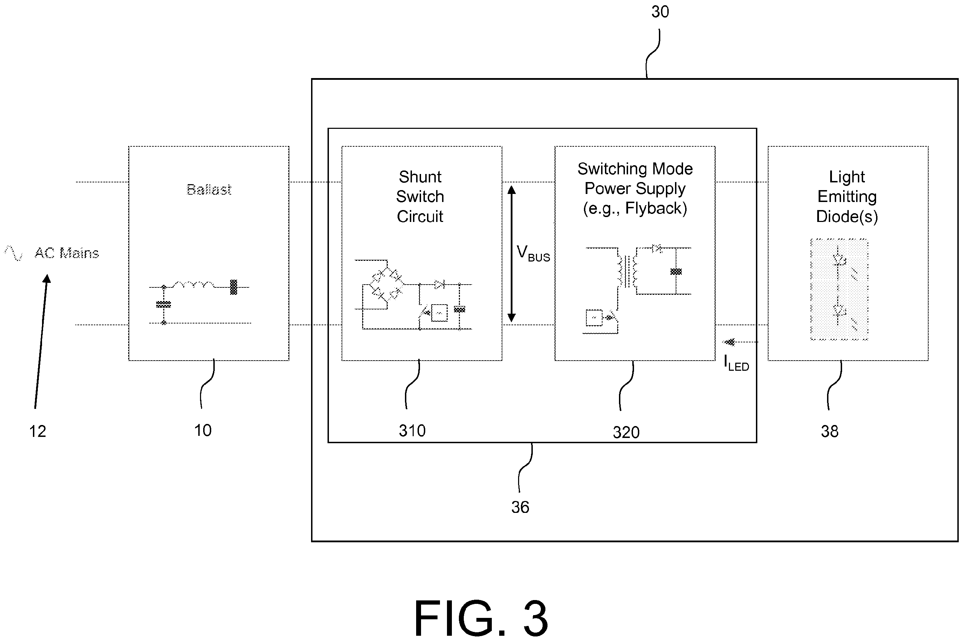

FIG. 3 is a block diagram illustrating one exemplary embodiment of TLED lamp 30 supplied with power by EM ballast 10. As illustrated in FIG. 3, TLED lamp 30 includes a lighting driver 36 and one or more LEDs 38. Lighting driver 36 has a dual stage topology and includes a shunt switch circuit 310 and a switching mode power supply (SMPS) 320. EM ballast 10 may be an uncompensated ballast, an inductive ballast, or a capacitive ballast.

Beneficially, in some embodiments shunt switch circuit 310 provides compatibility with EM ballast 10, while the SMPS provides mains isolation.

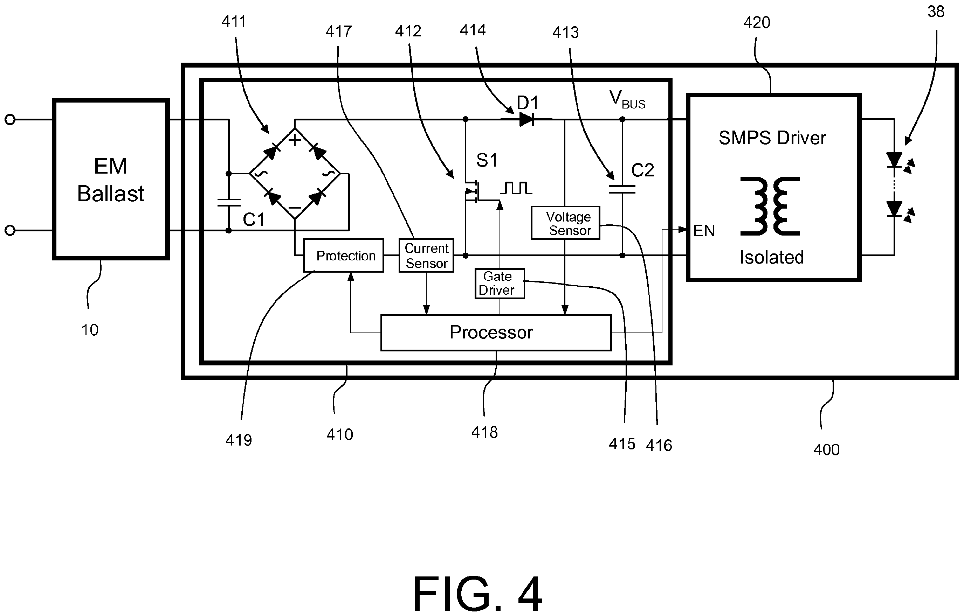

To operate TLED lamp 30 behind all EM ballast configurations illustrated in FIGs. 1A-1F, an intelligent ballast type detection algorithm is employed in order to minimize ballast loss. Accordingly, in some configurations shunt switch circuit 310 is configured to detect when an input of lighting driver 36 is connected to mains power 12 without ballast 10, and in response thereto to disable lighting driver 36, and further configured to detect a type of ballast 10 connected to the input of lighting driver 36 when the input of lighting driver 36 is connected to ballast 10, and to regulate a bus voltage (V_{BUS}) of shunt switch circuit 310 according to the detected type of ballast 10. These features will be described in greater detail below, in particular with respect to FIGs. 4, 6-11 and 12A-B. To prevent short-circuiting of EM ballast 10, shunt switch circuit 310 may include an over-current protection circuit.

SMPS 320 is configured to receive the bus voltage V_{BUS} and in response thereto to supply a lamp current I_{LED} to drive the one or more light emitting diodes 38. In some embodiments, SMPS comprises a flyback circuit.

Beneficially, shunt switch circuit 310 is controlled is such a way that the bus voltage V_{BUS} is regulated. In some embodiments, V_{BUS} is regulated to be about 150V. SMPS 320 (e.g., a flyback stage) is fed with this constant voltage V_{BUS} and operated in a constant output current mode to supply power to the one or more LEDs 38. In some embodiments, SMPS delivers about 25W to the one or more LEDs 38.

FIG. 4 is a detailed diagram illustrating one exemplary embodiment of a TLED lamp 400 supplied with power by an electromagnetic (EM) ballast 10, which may be an uncompensated ballast, an inductive ballast, or a capacitive ballast. TLED lamp 400 is one embodiment of TLED 30 of FIGs. 2 and 3. As illustrated in FIG. 4, TLED lamp 400 includes: a lighting driver comprising a shunt switch circuit 410 and a switching mode power supply (SMPS) 420; and one or more LEDs 38. Shunt switch circuit 410 is one embodiment of shunt switch circuit 310 of FIG. 3, and SMPS 420 is one embodiment of SMPS 320 of FIG. 3.

Shunt switch circuit 410 comprises: a rectifier 411;, a shunt switching device 412 connected across an output of rectifier 411; an output capacitor 413 and a diode 414 connected in series across the output of rectifier 411, wherein output capacitor 413 is connected across an output of shunt switch circuit 410; a gate driver 415 for driving shunt switching device 412; a voltage sensor 416 configured to sense a bus voltage V_{BUS} across output capacitor 413; a current sensor 417 configured to sense a rectifier current through rectifier 411; a processor 418 configured to control a switching operation of shunt switching device 412 in response to the sensed bus voltage V_{BUS} and the rectifier current; and a protection circuit 419 for protecting ballast 10 and/or the lighting driver of TLED lamp 400 from a short circuit and/or over-voltage and/or over-current condition under control of processor 418. Processor 418 may include one of more associated memory devices, include volatile memory (e.g., dynamic random access memory) and/or nonvolatile memory (e.g., FLASH memory) for storing programming code (i.e. software) for various operations which may be performed by processor 418.

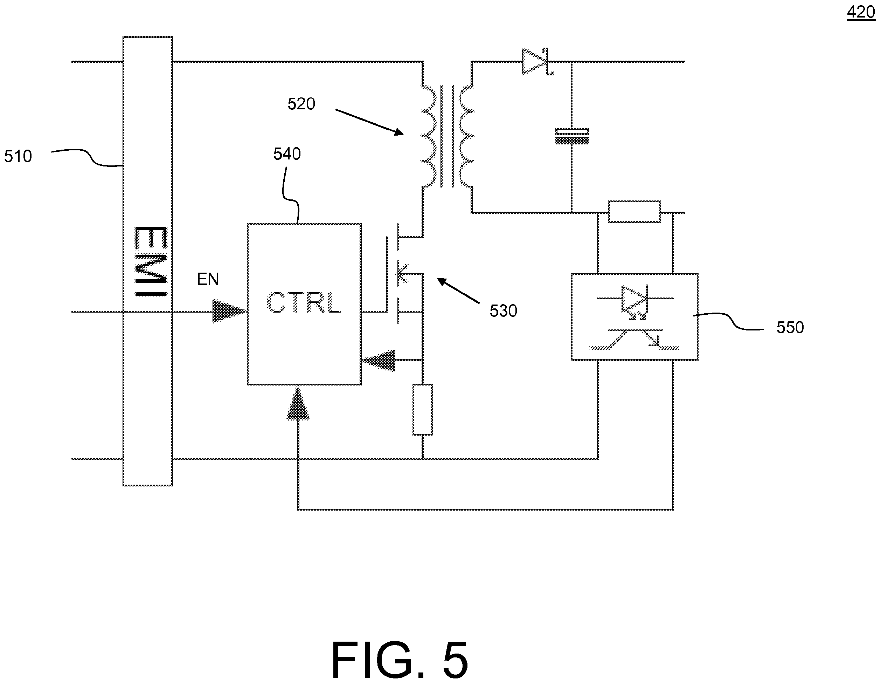

FIG. 5 is a block diagram illustrating one exemplary embodiment of switching mode power supply (SMPS) 420. SMPS 420 includes an electromagnetic interference (EMI) barrier 510; an isolation transformer 520 that provides galvanic isolation between the bus voltage V_{BUS} and the lamp current I_{LED}; a switch 530 in series with a primary winding of isolation transformer 520; a controller 540 configured to control switch 530 to control a duty cycle of the lamp current I_{LED}; and an optical coupler 550 that provides to controller 540 a feedback signal based on the lamp current I_{LED}. Optical coupler 550 provides galvanic isolation between light emitting diodes 38 and controller 540.

As illustrated in FIG. 5, controller 540 receives an enable signal (also shown in FIG. 4) from processor 418 of shunt switch circuit 410 which selectively enables and disables operation of SMPS 420. This feature may be used in connection with ballast type detection and detection of abnormal operating situations, as described below.

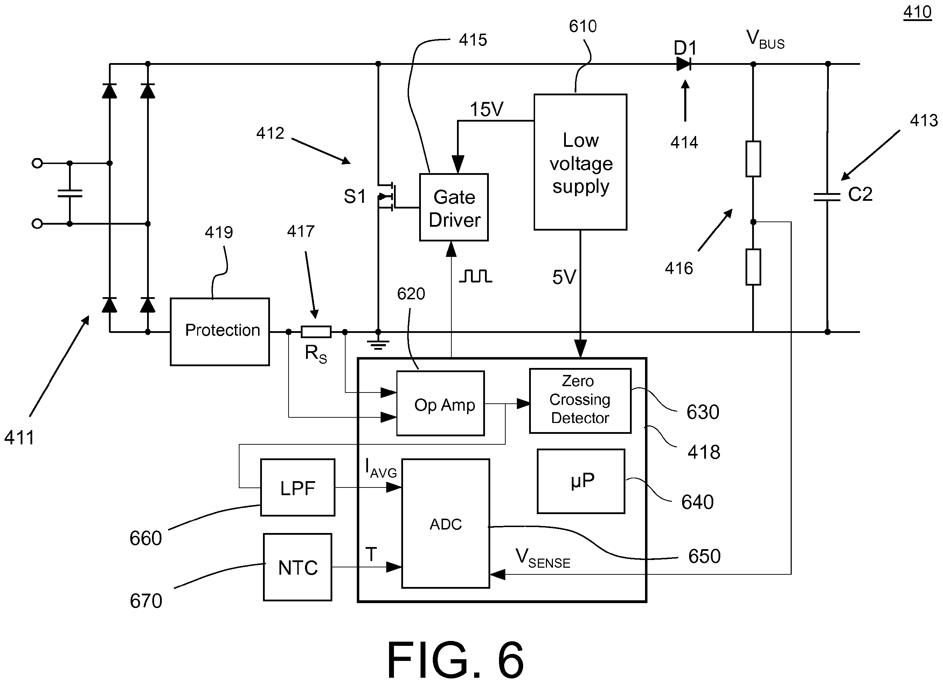

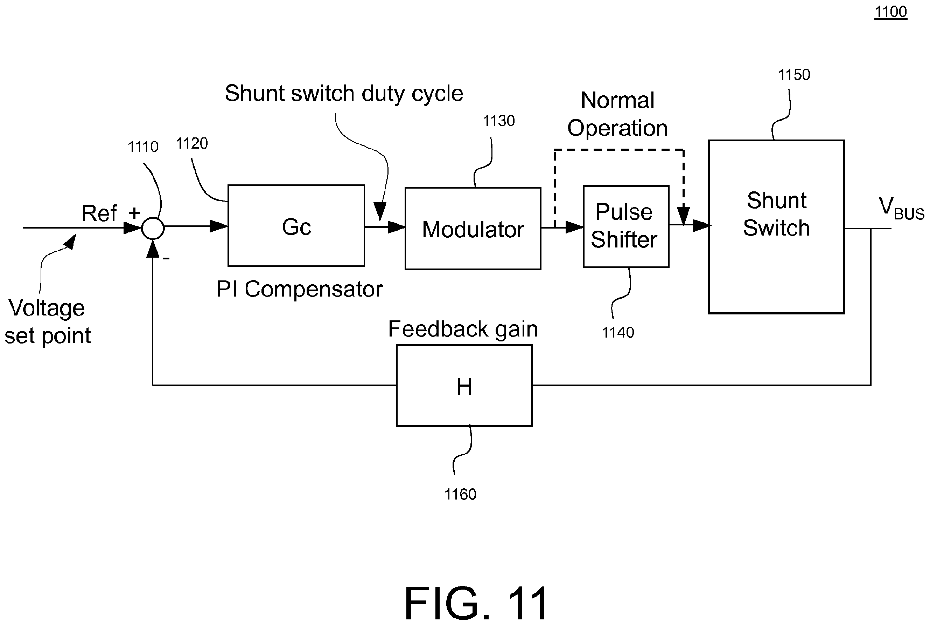

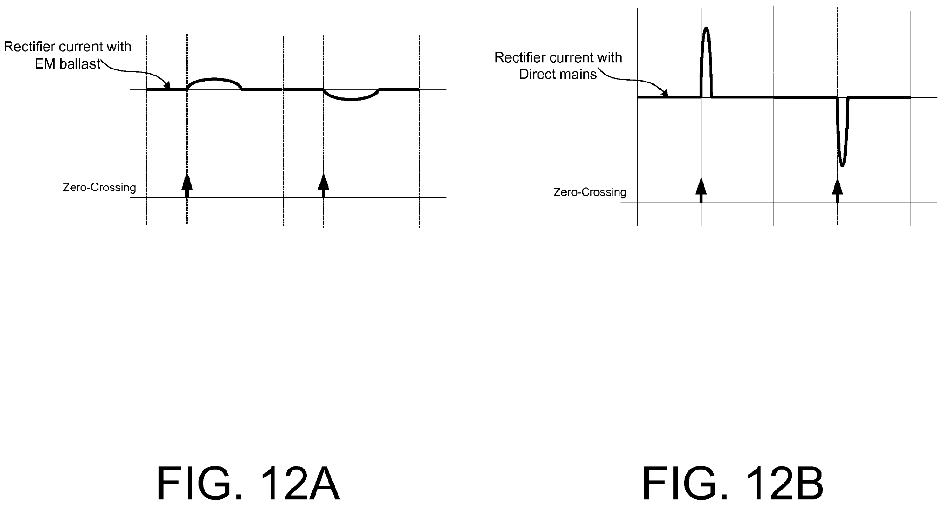

Returning again to FIG. 4, operationally processor 418 manages the timing control of shunt switching device 412 and regulates the bus voltage V_{BUS}, for example with a digital proportional integrator (PI) type compensation loop as described in greater detail below with respect to FIG. 11. In particular, processor 418 controls the duration of a switching control pulse supplied by gate driver 415 to shunt switching device 412 and its position with respect to zero crossings of the rectifier current as sensed by current sensor 417. Beneficially, processor 418 is configured to execute an algorithm to detect when an input of rectifier 411 is connected to mains power 12 without EM ballast 10, and in response thereto to disable the lighting driver, including shunt switch circuit 410 and/or SMPS 420. An example embodiment of such an algorithm will be described in greater detail below with respect to FIGs. 12A-B. Also beneficially, processor 418 is configured to execute an algorithm to detect the type of EM ballast 10 connected to the input of rectifier 411 (e.g., a capacitive ballast or an inductive ballast), and to control the switching operation of shunt switching device 412 to regulate the bus voltage V_{BUS} according to the detected type of EM ballast 10. An exemplary embodiment of such an algorithm will be described in greater detail below with respect to FIGs. 6-10.

FIG. 6 is a schematic diagram illustrating one exemplary embodiment of shunt switch circuit 410. In the embodiment of FIG. 6, voltage sensor 416 comprises a resistive voltage divider, with the impedance of the resistors being much greater than that of capacitor C2 at the switching frequency of shunt switching device 412. Also in the embodiment of FIG. 6, current sensor 417 comprises a sampling resistor R_{S}.

Also shown in FIG. 6 is a low voltage supply 610 which, for example, may be derived from an auxiliary winding of a power transformer in SMPS 420. Low voltage supply 610 supplies the voltages for gate driver 415 and processor 418.

As shown in FIG. 6, processor 418 includes an operational amplifier (op amp) 620, a zero crossing detector 630, a microprocessor or microcontroller 640, and an analog-to-digital converter (ADC) 650. Zero crossing detector 630 may include a comparator. Shunt switch circuit 410 also includes low pass filter (LPF) 660 and negative temperature compensation (NTC) sensor 670.

Operationally, voltage sensor 416 senses the bus voltage V_{BUS} and supplies the sensed voltage V_{SENSE} to processor 418. Also, current sensor 417 supplies the measured rectifier current to op amp 620. The amplified rectifier current from op amp 620 is supplied to zero crossing detector 630 for zero crossing detection, and is also supplied to LPF 660. Zero crossing detector 630 detects when the rectifier current experiences a zero crossing. LPF 660 averages the rectifier current and supplies the averaged rectifier current I_{AVG} to the input of ADC 650 which converts it to a digital value.

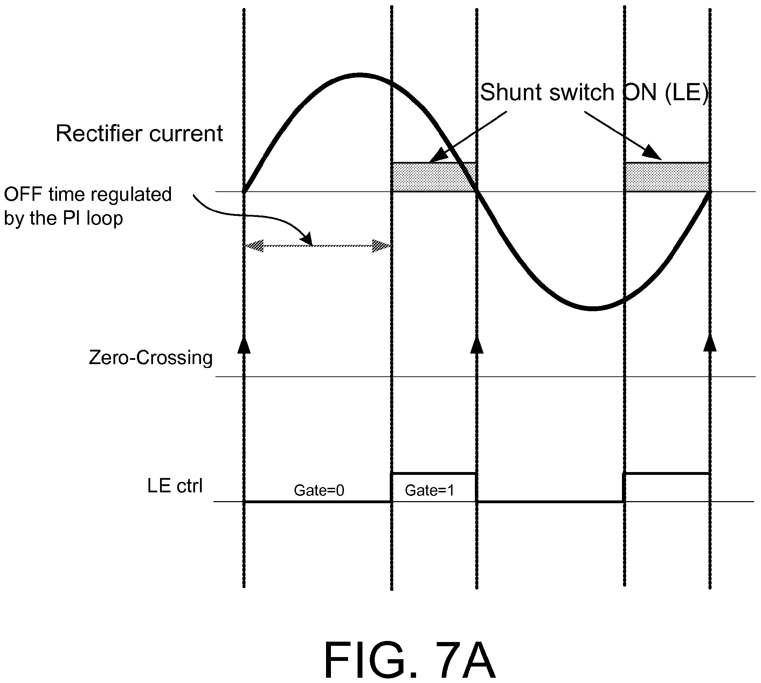

Processor 418 may use the sensed bus voltage V_{BUS}, the rectifier current, and the averaged rectifier current I_{AVG} to execute various algorithms to regulate the bus voltage V_{BUS}, to detect a type of ballast 10 to with TLED lamp 400 is connected, and to detect when TLED lamp 400 is connected to mains 12 without a ballast, as will be explained in greater detail below with respect to FIGs 7A-B through FIGs. 12A-B.

FIG. 7A illustrates a relationship between various signals which may be employed by shunt switch circuit 410 when operating in a first operating mode. In particular, FIG. 7A illustrates a relationship between the rectifier current and switching control pulses supplied to shunt switching device 412 by processor 418 via gate driver 415 when shunt switch circuit 410 operates in a leading edge (LE) control mode. As seen in FIG. 7A, when the LE control mode is employed, shunt switching device 412 is controlled by processor 418 to be turned off at zero-crossings of the rectifier current. The duration of the "OFF" time of shunt switching device 412 in each period of the rectifier current determines the level of the bus voltage V_{BUS}. Thus, by regulating the OFF time, for example via a proportional integrator (PI) loop, processor 418 may regulate the bus voltage V_{BUS}.

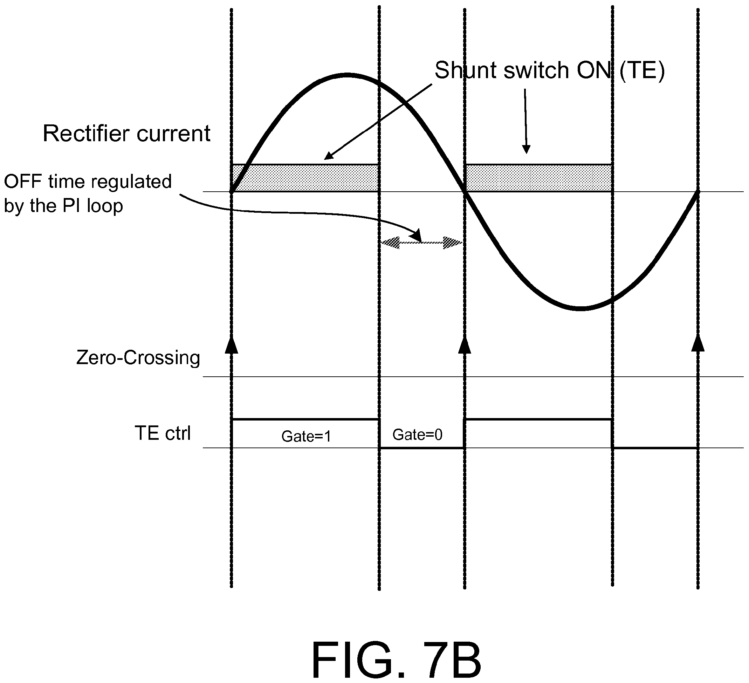

FIG. 7B illustrates a relationship between various signals which may be employed by shunt switch circuit 420 when operating in a second operating mode. In particular, FIG. 7B illustrates a relationship between the rectifier current and switching control pulses supplied to shunt switching device 412 by processor 418 via gate driver 415 when shunt switch circuit 410 operates in a trailing edge (TE) control mode. As seen in FIG. 7B, when the TE control mode is employed, shunt switching device 412 is controlled by processor 418 to be turned on at zero-crossings of the rectifier current.

The loss in the EM ballast is high when a TLED lamp is connected to a capacitive ballast and operated in the LE control mode, thus causing a risk of overheating when operated with certain ballasts. On the other hand, when a TLED lamp that is connected to a capacitive ballast is operated in the TE control mode, the loss is greatly reduced.

Beneficially, In order to minimize the loss in EM ballast 10, TLED lamp 400 may employ trailing edge (TE) control when TLED lamp 400 is connected to a capacitive ballast, and may employ leading edge (LE) control when TLED lamp 400 is connected to an inductive ballast.

Accordingly, TLED lamp 400, and in particular shunt switch circuit 410, and even more particularly processor 418, may employ a ballast type detection algorithm to determine whether TLED lamp 400 is connected to a capacitive ballast or an inductive ballast so that an appropriate control mode can be applied.

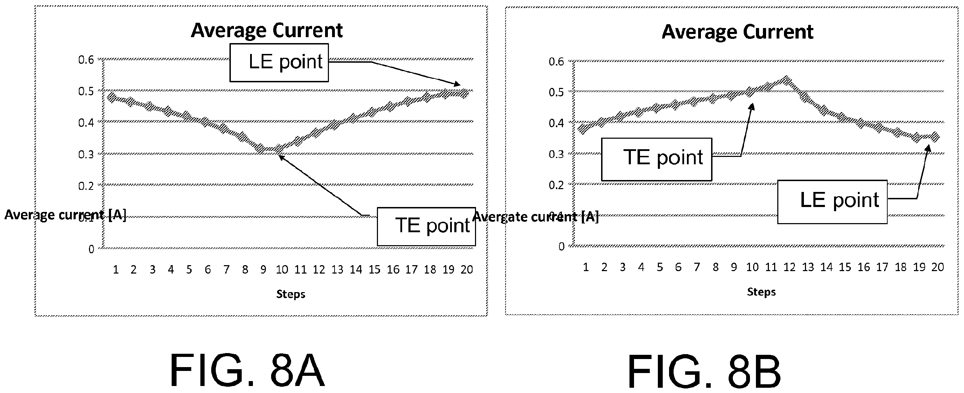

FIGs. 8A-B plot average rectifier current versus switching control pulse timing for an exemplary embodiment of a TLED lamp and as associated lighting driver connected to two different types of electromagnetic ballasts. In particular, FIG. 8A illustrates a case where the TLED lamp and associated lighting driver are connected to a capacitive ballast, and FIG. 8B illustrates a case where the TLED lamp and associated lighting driver are connected to an inductive ballast.

FIGs. 8A-B plot the variation of the average rectifier current when the switching control pulse is shifted across half of one period of the mains power. In the examples of FIGs. 8A-B, the mains frequency is 50 Hz, yielding a total shift of 10ms plotted in steps of 0.5ms. As can be seen from FIG. 8A, for a capacitive ballast the average rectifier current I_{AVG} is minimal when operated at the TE control point, and as can be seen from FIG. 8B, for an inductive ballast the average rectifier current I_{AVG} is minimal when operated at the LE control point.

From FIGs. 8A-B, it can be seen that by measuring the average rectifier current I_{AVG} at the normal LE switching point, and then measuring the average rectifier current I_{AVG-SHIFTED} when the timing of the switching control pulse is shifted by about 2ms (to provide adequate margin for noise, mains voltage variation, etc.) with respect to the normal LE switching point, and then comparing I_{AVG} to I_{AVG-SHIFTED}, it is possible to detect whether the ballast is a capacitive ballast or an inductive ballast. Specifically, if the average rectifier current I_{AVG-SHIFTED} when the timing of the switching control pulse is shifted with respect to the normal LE switching point is less than the average rectifier current I_{AVG} at the normal LE switching point, then the response is following FIG. 8A and it can be concluded that the ballast is a capacitive ballast. Conversely, if the shifted average rectifier current I_{AVG-SHIFTED} is greater than the average rectifier current I_{AVG}, then the response is following FIG. 8B and it can be concluded that the ballast is an inductive ballast.

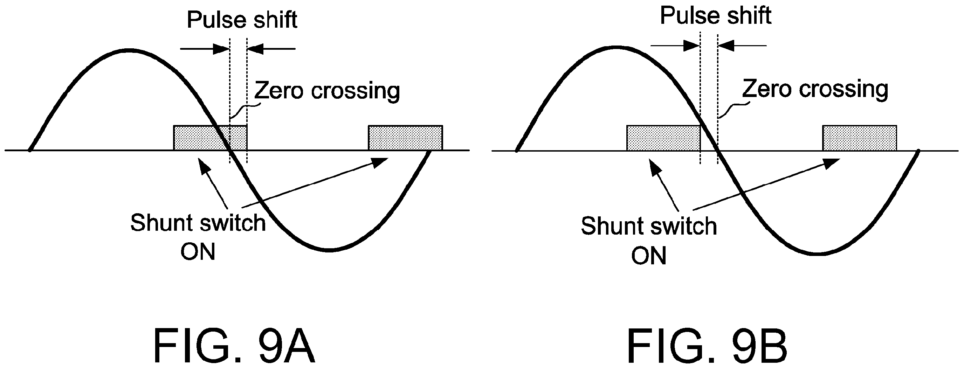

FIGs. 9A-B illustrate two embodiments of a method of detecting a type of ballast connected to a TLED lamp and associated lighting driver. In FIG. 9A, the timing of the switching control pulse is shifted by delaying the switching control pulse with respect to the normal LE switching point. In FIG. 9B, the timing of the switching control pulse is shifted by advancing the switching control pulse with respect to the normal LE switching point.

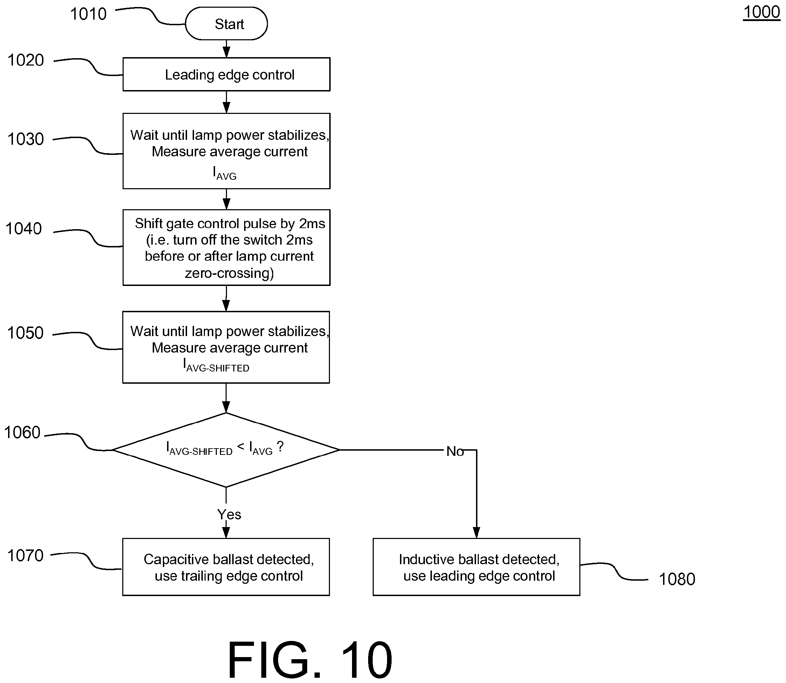

FIG. 10 is a flowchart of one embodiment of a method 1000 of detecting a type of ballast connected to a TLED lamp and associated lighting driver. As one particular example, the method 1000 will be described with respect to the TLED lamp 400 of FIG. 4.

The method starts at step 1010. In step 1020, TLED lamp 400 is operated with leading edge (LE) control. More specifically, processor 418 regulates the bus voltage V_{BUS} with LE control of the switching control pulse provided to shunt switching device 412 by gate driver 415. It is beneficial that the method 1000 begins with LE control, since this is a safe control method for both inductive and capacitive ballasts with no excessive ballast loss, while trailing edge (TE) control may lead to unacceptable loss for inductive ballasts and therefore present a risk of overheating.

In a step 1030, processor 418 regulates the bus voltage V_{BUS} for a given period until the lamp power stabilizes, and then records the measured average rectifier current I_{AVG}.

Then, in a step 1040, processor 418 shifts the switching control pulse by a predetermined time shift, for example, 2ms. The time shift is selected such that the average rectifier current will have a significant difference between the LE switching point and the shifted switching point, while at the same time not leading to excessive loss for the shifted pulse operation.

In a step 1050, processor 418 again regulates the bus voltage V_{BUS} for a given period until the lamp power stabilizes, and then records the measured average rectifier current I_{AVG-SHIFTED}.

In a step 1060, processor 418 compares the average rectifier current I_{AVG} at the normal LE switching point to the average rectifier current I_{AVG-SHIFTED} when the timing of the switching control pulse is shifted with respect to the normal LE switching point.

If the shifted average rectifier current I_{AVG-SHIFTED} is less than the average rectifier current I_{AVG}, then processor 418 determines that the ballast is a capacitive ballast and processor 418 operates shunt switch circuit 410 and TLED lamp 400 with TE control. Otherwise processor 418 determines that the ballast is an inductive ballast and processor 418 operates shunt switch circuit 410 and TLED lamp 400 with LE control. As a result, TLED lamp 400 is automatically operated with minimum EM ballast loss for different fixture circuits.

FIG. 11 is a functional block diagram illustrating operation of a feedback loop 1100 for setting a bus voltage for a shunt switch circuit. In particular, FIG. 11 illustrates operation of a proportional integrator (PI) loop. Feedback loop 1100 includes an adder 1110, a gain block (PI compensator) 1120, a modulator 1130, a pulse shifter 1140, a shunt switch 1150, and a feedback gain block 1160.

As described above, TLED lamp 400 is configured to be retrofit into an existing lighting fixture having a ballast whose type may not be known. However, it may occur that TLED lamp 400 is misused and is connected directly to mains power 12 without any EM ballast. In that case, beneficially processor 418 may execute an algorithm to detect when an input of rectifier 411, and therefore of TLED lamp 400, is connected to mains power 12 without an electromagnetic (EM) ballast, and in response thereto to disable the lighting driver.

FIGs. 12A-B illustrate rectifier current signals when one exemplary embodiment of a TLED lamp (e.g., TLED lamp 400) is connected, respectively, to an EM ballast (FIG. 12A), and to mains power 12 without an EM ballast (FIG. 12B). Because of much lower source impedance when rectifier 411 is connected to mains power 12 without an EM ballast, the rectifier current has a much higher peak as shown in FIG. 12B, compared to FIG. 12A. Also as shown in FIG. 12B, when rectifier 411 is connected to mains power 12 without an EM ballast, then the zero-crossing of the rectifier current is located closer in time to the peak of the rectifier current. By monitoring the peak rectifier current and/or the time delay between a zero crossing of the rectifier current and the peak rectifier current, misuse of TLED lamp 400 by direct connection to mains power 12 can be detected. Beneficially, when the absence of a ballast is detected, then the lighting driver is disabled to protect TLED lamp 400. Beneficially, SMPS 420 is disabled while detecting whether or not the input of rectifier 411 is connect to mains power 12 without a ballast.

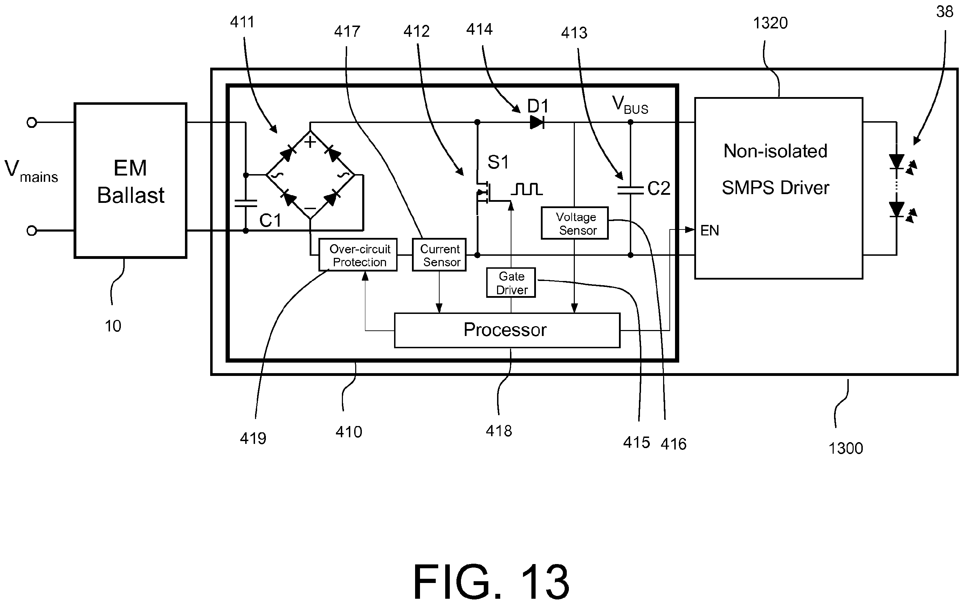

FIG. 13 is a detailed diagram illustrating another exemplary embodiment of a TLED lamp 1300 supplied with power by an electromagnetic (EM) ballast 10. TLED lamp 1300 is the same as TLED lamp 400, except that TLED lamp 1300 employs a non-isolated SMPS 1320. TLED lamp 1300 may have a glass-tube based architecture that does not require mains power isolation in the lighting driver. In that case, when the LED string voltage does not match the optimal output voltage of shunt switch circuit 410, then SMPS driver 1330 converts the bus voltage V_{BUS} to match the LED string voltage. The benefit of using a non-isolated SMPS 1320 is the lower cost and smaller size achieved by removal of the isolation requirement.

In still another embodiment where a glass tube based architecture is employed, and mains isolation in the driver is not necessary, the SMPS driver can be left out altogether and the shunt switch stage may then regulate the LED current instead of the bus voltage.

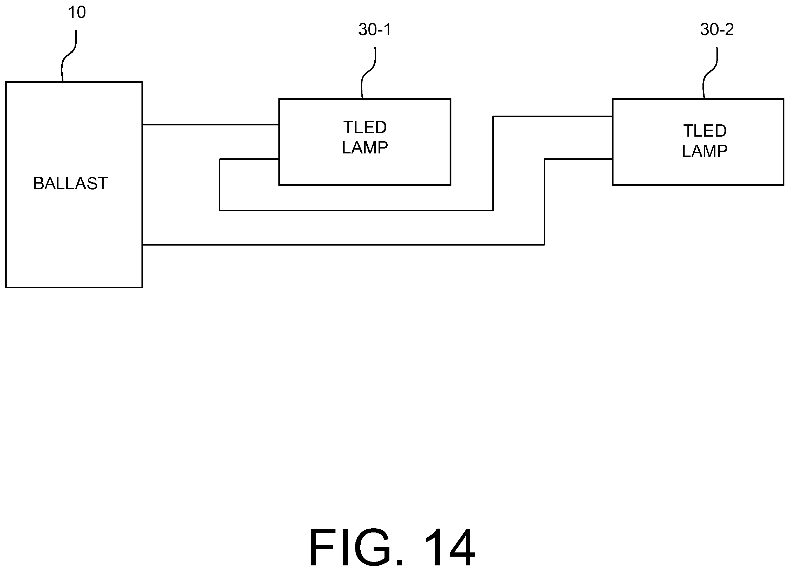

For a TLED lamp with a lighting driver as described above including the shunt switch circuit, it is possible to connect two TLED lamps in series with one EM ballast. Accordingly, FIG. 14 illustrates two TLEDs 30-1 and 30-1 connected in series with an EM ballast 100.

While several inventive embodiments have been described and illustrated herein, those of ordinary skill in the art will readily envision a variety of other means and/or structures for performing the function and/or obtaining the results and/or one or more of the advantages described herein. More generally, those skilled in the art will readily appreciate that all parameters, dimensions, materials, and configurations described herein are meant to be exemplary and that the actual parameters, dimensions, materials, and/or configurations will depend upon the specific application or applications for which the inventive teachings is/are used. Those skilled in the art will recognize, or be able to ascertain using no more than routine experimentation, many equivalents to the specific inventive embodiments described herein. It is, therefore, to be understood that the foregoing embodiments are presented by way of example only. Inventive embodiments of the present disclosure are directed to each individual feature, system, article, material, kit, and/or method described herein. In addition, any combination of two or more such features, systems, articles, materials, kits, and/or methods, if such features, systems, articles, materials, kits, and/or methods are not mutually inconsistent.

All definitions, as defined and used herein, should be understood to control over dictionary definitions, definitions in mentioned documents, and/or ordinary meanings of the defined terms.

The indefinite articles "a" and "an," as used herein in the specification and in the claims, unless clearly indicated to the contrary, should be understood to mean "at least one."

It should also be understood that, unless clearly indicated to the contrary, in any methods claimed herein that include more than one step or act, the order of the steps or acts of the method is not necessarily limited to the order in which the steps or acts of the method are recited.

Any reference numerals or other characters, appearing between parentheses in the claims, are provided merely for convenience and are not intended to limit the claims in any way.

In the claims, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of" and "consisting essentially of" shall be closed or semi-closed transitional phrases, respectively.

## Claims

1. An apparatus comprising a light emitting diode (LED) tube (TLED) lamp, the TLED lamp comprising:
at least partially transparent tube having an electrical connector configured to be installed in a fluorescent light fixture;
one or more light emitting diodes provided inside the tube; and
a lighting driver provided inside the tube and connected to the electrical connector and being configured to supply power to the one or more light emitting diodes, the lighting driver comprising:
a shunt switch circuit, comprising:
a rectifier (411) connected to the electrical connector,
a shunt switching device (412) connected across an output of the rectifier,
an output capacitor (413) and
a diode (414) connected in series across the output of the rectifier,
wherein the output capacitor (414) is connected across an output of the shunt switch circuit,
a voltage sensor (416) configured to sense a bus voltage (Vbus) across the output capacitor (413),
a current sensor (417) configured to sense a rectifier current through the rectifier (411), and
a processor (418) configured to control a switching operation of the shunt switching device (412) in response to the sensed bus voltage and the
rectifier current to regulate the bus voltage (Vbus); and
**characterized in that** the lighting driver further comprises a switching mode power supply configured to receive the bus voltage and in response thereto to supply a lamp current to drive the one or more light emitting diodes and wherein the processor is configured to execute an algorithm to detect when the input of the rectifier is connected to mains power without an electromagnetic (EM) ballast, and in response thereto to disable the lighting driver, wherein the algorithm for detecting when the input of the rectifier is connected to mains power without an EM ballast comprises:
disabling the supply of the lamp current to drive the one or more light emitting diodes; and
while the supply of the lamp current is disabled,
determining at least one of: (i) a peak rectifier current, and (ii) a time delay between a zero crossing of the rectifier current and the peak rectifier current; and
comparing at least one of: (i) the peak rectifier current and a peak detection threshold; and (ii) the time delay and a time delay threshold to obtain a comparison result; and
determining when the input of the rectifier is connected to mains power without the EM ballast based on the obtained comparison result and wherein the processor is configured to execute an algorithm to detect a type of electromagnetic (EM) ballast connected to an input of the rectifier, and to control the switching operation of the shunt switching device to regulate the bus voltage according to the detected type of EM ballast.

2. The apparatus of claim 1, wherein when the detected type of EM ballast is a capacitive ballast, the processor controls the shunt switch to be turned on at a zero crossing of the rectifier current, and when the detected type of EM ballast is an inductive ballast, the processor controls the shunt switch to be turned off at a zero crossing of the rectifier current.

3. The apparatus of claim 2, wherein the algorithm for detecting the type of EM ballast includes:
controlling the shunt switch to be turned off at a zero crossing of the rectifier current and measuring a first average value of the rectifier current;
controlling the shunt switch to be turned off at an offset time period with respect to the zero crossing of the rectifier current and measuring a second average value of the rectifier current;
comparing the first average current to the second average current;
when the second average current is less than the first average current, determining that the type of EM ballast is a capacitive ballast; and
when the second average current is not less than the first average current, determining that the type of EM ballast is an inductive ballast.

4. The apparatus of claim 1, wherein the TLED lamp is a first TLED lamp, wherein the apparatus further comprises a second TLED lamp connected in series with the first TLED lamp to an output of an electromagnetic ballast.

5. The apparatus of claim 1, wherein the tube includes at least one end cap in which the electrical connector is provided, and a substantially cylindrical shell connected to the end cap, and wherein at least a portion of a surface of the shell is metallic.

6. The apparatus of any of the preceding claims, wherein the switching mode power supply is configured to provide galvanic isolation between the shunt switch circuit and the one or more lighting emitting diodes.

7. The apparatus according to any of the preceding claims wherein the switching mode power supply comprises a flyback circuit including:
an isolation transformer that provides galvanic isolation between the bus voltage and the lamp current;
a switch in series with a primary winding of the isolation transformer;
a controller configured to control the switch to control a duty cycle of the lamp current; and
an optical coupler that provides to the controller a feedback signal based on the lamp current, wherein the optical coupler provides galvanic isolation between the light emitting diodes and the controller.

## Patentansprüche

1. Vorrichtung, umfassend eine lichtemittierende Dioden-(LED)-Röhrenlampe (TLED), wobei die TLED-Lampe umfasst:
eine zumindest teilweise transparente Röhre mit einem elektrischen Leiter, welcher konfiguriert ist, in einem fluoreszierenden Beleuchtungskörper installiert zu werden;
eine oder mehrere lichtemittierende Dioden, welche innerhalb der Röhre bereitgestellt sind; und
einen Beleuchtungstreiber, welcher innerhalb der Röhre bereitgestellt und mit dem elektrischen Leiter verbunden und konfiguriert ist, die eine oder mehreren lichtemittierenden Dioden mit Strom zu versorgen, wobei der Beleuchtungstreiber umfasst:
einen Shunt-Schaltkreis, umfassend:
einen Gleichrichter (411), welcher mit dem elektrischen Leiter verbunden ist,
eine Shunt-Schaltvorrichtung (412), welche über einen Ausgang des Gleichrichters verbunden ist,
einen Ausgangskondensator (413) und
eine Diode (414), welche über den Ausgang des Gleichrichters in Serie verbunden ist, wobei der Ausgangskondensator (414) über einen Ausgang des Shunt-Schaltkreises verbunden ist,
einen Spannungsfühler (416), welcher konfiguriert ist, eine Busspannung (Vbus) über dem Ausgangskondensator (413) zu erkennen,
einen Stromfühler (417), welcher konfiguriert ist, einen Gleichrichterstrom durch den Gleichrichter (411) zu erkennen, und
einen Prozessor (418), welcher konfiguriert ist, einen Schaltvorgang der Shunt-Schaltvorrichtung (412) als Reaktion auf die erkannte Busspannung und den Gleichrichterstrom zu steuern, um die Busspannung (Vbus) zu regeln; und
**dadurch gekennzeichnet, dass** der Beleuchtungstreiber weiter eine Schaltmodusstromversorgung umfasst, welche konfiguriert ist, die Busspannung zu empfangen und als Reaktion darauf einen Lampenstrom zu liefern, um die eine oder mehreren lichtemittierenden Dioden anzusteuern, und wobei der Prozessor konfiguriert ist, einen Algorithmus auszuführen, um zu erfassen, wann der Eingang des Gleichrichters ohne einem elektromagnetischen (EM) Vorschaltgerät mit der Netzspannung verbunden ist, und als Reaktion darauf den Beleuchtungstreiber zu deaktivieren, wobei der Algorithmus zum Erfassen, wann der Eingang des Gleichrichters ohne einem EM-Vorschaltgerät mit der Netzspannung verbunden ist, umfasst:
Deaktivieren der Versorgung des Lampenstroms, um die eine oder mehreren lichtemittierenden Dioden anzusteuern; und
während die Versorgung des Lampenstroms deaktiviert ist,
Bestimmen von zumindest einem von: (i) einem Gleichrichterspitzenstrom, und (ii) einer Zeitverzögerung zwischen einem Nulldurchgang des Gleichrichterstroms und dem Gleichrichterspitzenstrom; und
Vergleichen von zumindest einem von: (i) dem Gleichrichterspitzenstrom und einer Erfassungsschwellenspitze; und (ii) der Zeitverzögerung und einer Zeitverzögerungsschwelle, um ein Vergleichsergebnis zu erhalten; und
Bestimmen, wann der Eingang des Gleichrichters ohne dem EM-Vorschaltgerät mit der Netzspannung verbunden ist, auf Basis des erhaltenen Vergleichsergebnisses, und wobei der Prozessor konfiguriert ist, einen Algorithmus auszuführen, um einen Typ von elektromagnetischem (EM) Vorschaltgerät zu erfassen, welches mit einem Eingang des Gleichrichters verbunden ist, und den Schaltvorgang der Shunt-Schaltvorrichtung zu steuern, um die Busspannung gemäß dem erfassten Typ von EM-Vorschaltgerät zu regeln.

2. Vorrichtung nach Anspruch 1, wobei, wenn der erfasste Typ von EM-Vorschaltgerät ein kapazitives Vorschaltgerät ist, der Prozessor den Shunt-Schalter so steuert, dass er an einem Nulldurchgang des Gleichrichterstroms eingeschaltet wird, und, wenn der erfasste Typ von EM-Vorschaltgerät ein induktives Vorschaltgerät ist, der Prozessor den Shunt-Schalter so steuert, dass er an einem Nulldurchgang des Gleichrichterstrom abgeschaltet wird.

3. Vorrichtung nach Anspruch 2, wobei der Algorithmus zum Erfassen des Typs des EM-Vorschaltgeräts beinhaltet:
Steuern des Shunt-Schalters, so dass er an einem Nulldurchgang des Gleichrichterstroms abgeschaltet wird und Messen eines ersten Durchschnittswerts des Gleichrichterstroms;
Steuern des Shunt-Schalters, so dass er zu einer Kompensationszeitspanne in Bezug auf den Nulldurchgang des Gleichrichterstroms abgeschaltet wird und Messen eines zweiten Durchschnittswerts des Gleichrichterstroms;
Vergleichen des ersten Durchschnittsstroms mit dem zweiten Durchschnittsstrom;
wenn der zweite Durchschnittsstrom kleiner ist als der erste Durchschnittsstrom, Bestimmen, dass der Typ des EM-Vorschaltgeräts ein kapazitives Vorschaltgerät ist; und
wenn der zweite Durchschnittsstrom nicht kleiner ist als der erste Durchschnittsstrom, Bestimmen, dass der Typ des EM-Vorschaltgeräts ein induktives Vorschaltgerät ist.

4. Vorrichtung nach Anspruch 1, wobei die TLED-Lampe eine erste TLED-Lampe ist, wobei die Vorrichtung weiter eine zweite TLED-Lampe umfasst, welche in Serie mit der ersten TLED-Lampe mit einem Ausgang eines elektromagnetischen Vorschaltgeräts verbunden ist.

5. Vorrichtung nach Anspruch 1, wobei die Röhre zumindest eine Endkappe, in welcher der elektrische Leiter bereitgestellt ist; und eine im Wesentlichen zylindrische Hülle, welche mit der Endkappe verbunden ist, beinhaltet, und wobei zumindest ein Abschnitt einer Oberfläche der Hülle metallisch ist.

6. Vorrichtung nach einem der vorstehenden Ansprüche, wobei die Schaltmodusstromversorgung konfiguriert ist, galvanische Isolierung zwischen dem Shunt-Schaltkreis und der einen oder den mehreren lichtemittierenden Dioden bereitzustellen.

7. Vorrichtung nach einem der vorstehenden Ansprüche, wobei die Schaltmodusstromversorgung eine Rücklaufschaltung umfasst, welche beinhaltet:
einen Isolationstransformator, welcher galvanische Isolierung zwischen der Busspannung und dem Lampenstrom bereitstellt;
einen Schalter in Serie mit einer primären Wicklung des Isolationstransformators;
eine Steuerung, welche konfiguriert ist, den Schalter zu steuern, um einen Arbeitszyklus des Lampenstroms zu steuern; und
einen optischen Koppler, welcher ein Rückkopplungssignal für die Steuerung auf Basis des Lampenstroms bereitstellt, wobei der optische Koppler galvanische Isolation zwischen den lichtemittierenden Dioden und der Steuerung bereitstellt.

## Revendications

1. Appareil comprenant une lampe à tube (TDEL) à diode électroluminescente (DEL), la lampe TDEL comprenant :
un tube au moins partiellement transparent ayant un connecteur électrique configuré pour être installé dans un appareil d'éclairage fluorescent ;
une ou plusieurs diodes électroluminescentes prévues à l'intérieur du tube ; et
un circuit d'attaque d'éclairage prévu à l'intérieur du tube et connecté au connecteur électrique et configuré pour alimenter les une ou plusieurs diodes électroluminescentes, le circuit d'attaque d'éclairage comprenant :
un circuit de commutateur de dérivation, comprenant :
un redresseur (411) connecté au connecteur électrique,
un dispositif de commutation de dérivation (412) connecté à une sortie du redresseur,
un condensateur de sortie (413) et
une diode (414) connectée en série sur la sortie du redresseur,
dans lequel le condensateur de sortie (414) est connecté sur une sortie du circuit de commutateur de dérivation,
un capteur de tension (416) configuré pour détecter une tension de bus (Vbus) à travers le condensateur de sortie (413),
un capteur de courant (417) configuré pour détecter un courant de redresseur à travers le redresseur (411), et
un processeur (418) configuré pour commander une opération de commutation du dispositif de commutation de dérivation (412) en réponse à la tension de bus détectée et au courant de redresseur afin de réguler la tension de bus (Vbus) ; et
**caractérisé en ce que** le circuit d'attaque d'éclairage comprend en outre une alimentation en mode commutation configurée pour recevoir la tension de bus et, en réponse à celle-ci, pour fournir un courant de lampe pour exciter les une ou plusieurs diodes électroluminescentes, et dans lequel le processeur est configuré pour exécuter un algorithme pour détecter le moment où l'entrée du redresseur est connectée à l'alimentation secteur sans ballast électromagnétique (EM), et en réponse à ceci, pour désactiver le circuit d'attaque d'éclairage, dans lequel l'algorithme de détection du moment où l'entrée du redresseur est connectée à l'alimentation secteur sans ballast EM comprend les étapes consistant à :
désactiver l'alimentation du courant de lampe pour exciter les une ou plusieurs diodes électroluminescentes ; et
pendant que l'alimentation du courant de lampe est désactivée,
déterminer au moins un parmi : (i) un courant de redresseur de crête, et (ii) un retard entre un passage par zéro du courant de redresseur et le courant de redresseur de crête ; et
comparer au moins un parmi : (i) le courant de redresseur de crête et un seuil de détection de crête ; et (ii) le retard et un seuil de retard pour obtenir un résultat de comparaison ; et
déterminer le moment où l'entrée du redresseur est connectée à l'alimentation secteur sans le ballast EM sur la base du résultat de comparaison obtenu, et dans lequel le processeur est configuré pour exécuter un algorithme pour détecter un type de ballast électromagnétique (EM) connecté à une entrée du redresseur, et pour commander l'opération de commutation du dispositif de commutation de dérivation afin de réguler la tension de bus en fonction du type de ballast EM détecté.

2. Appareil selon la revendication 1, dans lequel lorsque le type détecté de ballast EM est un ballast capacitif, le processeur commande l'activation du commutateur de dérivation à un passage par zéro du courant du redresseur, et lorsque le type détecté de ballast EM est un ballast inductif, le processeur commande le commutateur de dérivation pour qu'il soit désactivé à un passage par zéro du courant de redresseur.

3. Appareil selon la revendication 2, dans lequel l'algorithme pour détecter le type de ballast EM comprend les étapes consistant à :
commander le commutateur de dérivation pour qu'il soit désactivé au niveau d'un passage par zéro du courant de redresseur et mesurer une première valeur moyenne du courant de redresseur ;
commander le commutateur de dérivation pour qu'il soit désactivé au niveau d'une période décalée par rapport au passage par zéro du courant de redresseur et mesurer une seconde valeur moyenne du courant de redresseur ;
comparer le premier courant moyen au second courant moyen ;
lorsque le second courant moyen est inférieur au premier courant moyen, déterminer que le type de ballast EM est un ballast capacitif ; et
lorsque le second courant moyen n'est pas inférieur au premier courant moyen, déterminer que le type de ballast EM est un ballast inductif.

4. Appareil selon la revendication 1, dans lequel la lampe TDEL est une première lampe TDEL, dans lequel l'appareil comprend en outre une seconde lampe TDEL connectée en série avec la première lampe TDEL à une sortie d'un ballast électromagnétique.

5. Appareil selon la revendication 1, dans lequel le tube comprend au moins un capuchon d'extrémité dans lequel le connecteur électrique est prévu, et une coque sensiblement cylindrique connectée au capuchon d'extrémité, et dans lequel au moins une partie d'une surface de la coque est métallique.

6. Appareil selon l'une quelconque des revendications précédentes, dans lequel l'alimentation en mode commutation est configurée pour fournir une isolation galvanique entre le circuit de commutateur de dérivation et les une ou plusieurs diodes électroluminescentes.

7. Appareil selon l'une quelconque des revendications précédentes, dans lequel l'alimentation en mode commutation comprend un circuit de retour, incluant :
un transformateur d'isolation qui assure une isolation galvanique entre la tension de bus et le courant de lampe ;
un commutateur en série avec un enroulement primaire du transformateur d'isolation ;
une commande configurée pour commander le commutateur afin de commander un cycle de service du courant de lampe ; et
un coupleur optique qui fournit à la commande un signal de rétroaction basé sur le courant de lampe, dans lequel le coupleur optique fournit une isolation galvanique entre les diodes électroluminescentes et la commande.
